Europäisches Patentamt

European Patent Office

Office européen des brevets

(11) Veröffentlichungsnummer: **0 402 348**
**A1**

# EUROPÄISCHE PATENTANMELDUNG

(21) Anmeldenummer: 90890172.1

(22) Anmeldetag: 01.06.90

(51) Int. Cl.⁵: **H01M 10/14, B65G 1/133**

(30) Priorität: **06.06.89 AT 1385/89**

(43) Veröffentlichungstag der Anmeldung:
**12.12.90 Patentblatt 90/50**

(84) Benannte Vertragsstaaten:
**AT CH DE ES FR GB IT LI SE**

(71) Anmelder: **Akkumulatorenfabrik Dr. Leopold Jungfer**

**A-9181 Feistritz im Rosental(AT)**

(72) Erfinder: **Frey, Helmut**
**Ressnigweg 34**
**A-9170 Ferlach(AT)**

(74) Vertreter: **Holzer, Walter, Dipl.-Ing. et al**
**Patentanwälte Dipl.-Ing. Dr.techn. Schütz**
**Alfred Dipl.-Ing. Holzer Walter Dipl.-Ing.**
**Pfeifer Otto Fleischmanngasse 9 ·**
**A-1040 Wien(AT)**

(54) **Magazin für Akkumulatorenplatten.**

(57) Magazin für Akkumulatorenplatten mit einer Transporteinrichtung (1), auf welcher die Akkumulatorenplatten (6) gestapelt und durch einen Plattenfolger (5) abgestützt sind, wobei beiderseits der Transportkette (2) Borstenleisten (4) zur Führung der Akkumulatorenplatten (6) angeordnet sind, die in Transportrichtung (A) schräg nach vorne gerichtete Borsten (7) tragen, welche an den Akkumulatorenplatten (6) angreifen.

EP 0 402 348 A1

## Magazin für Akkumulatorenplatten

Die Erfindung betrifft ein Magazin für Akkumulatorenplatten, mit einer horizontalen Transporteinrichtung, auf welcher Akkumulatorenplatten in Transportrichtung schräg nach hinten stehend gestapelt und am hinteren Stapelende mittels eines Plattenfolgers abgestützt sind, wobei am vorderen Stapelende eine Entnahmeeinrichtung für die Akkumulatorenplatten vorgesehen ist.

Bei der Herstellung von Akkumulatoren werden die Akkumulatorenplatten in einem Magazin zwischengelagert und durch die Entnahmeeinrichtung einzeln der nächsten Fertigungsstation zugeführt. Beim Hintereinanderstapeln der Akkumulatorenplatten kann es vorkommen, daß die vordersten Platten nach vorne gleiten bzw. kippen, so dsß sie nicht mehr in der richtigen Position sind, die zum Abheben durch die Entnahmeeinrichtung erforderlich ist.

Durch die europäische Patentschrift Nr. 0 141 806 ist ein Magazin der einleitend angegebenen Art bekannt. Zum Vorschub der Akkumulatorplatten sind an jeder Seite des Magazins zwei übereinander liegende Förderbänder oder -ketten vorgesehen, die mit federnden Mitnehmern versehen sind. Zusätzlich sind seitlich obere und untere Führungsschienen vorgesehen, wobei der Höhenabstand der oberen Führungsschienen zu den unteren Führungsschienen zur Anpassung an verschiedene Plattengrößen veränderbar ist. Zur Förderung bzw. Führung sind bei der bekannten Ausführung demnach in konstruktiv aufwendiger Weise vier Förderbänder und vier Führungsschienen erforderlich.

Aufgabe der Erfindung ist die Schaffung eines Magazins für Akkumulatorenplatten, das bei einfacher Ausbildung einen sicheren Halt der Platten bis zur Entnahmeeinrichtung gewährleistet. Das Magazin soll ferner leicht befüllbar sein und eine präzise Position der jeweiligen vordersten Platte gewährleisten. Diese Aufgabe wird bei einem Magazin der einleitend angegebenen Art erfindungsgemäß dadurch gelöst, daß beiderseits der Transporteinrichtung Borstenleisten mit in Transportrichtung schräg nach vorne gerichteten Borsten angeordnet sind, welche mit den Akkumulatorenplatten seitlich in Eingriff stehen.

Das erfindungsgemäße Magazin hat den Vorteil, daß es einfach in der Herstellung und damit kostengünstig ist. Durch das Vorsehen von Borstenleisten wird ein Gleiten oder Kippen des Plattenstapels während des Betriebes bzw. beim Nachfüllen des Magazins aufgrund der schrägstehenden Borsten verhindert. Die Borsten unterstützen außerdem das Vorschieben des Plattenstapels, indem sie eine horizontale Vor- und Rückbewegung ausführen, wobei sie bei der Vorbewegung eine Mitnahme des Plattenstapels bewirken. Zusätzlich sind die Platten infolge der schrägen Anordnung der Borsten leicht von hinten in das Transportmagazin einschiebbar. Die Borsten bewirken auch eine Vereinzelung der Platten unmittelbar an der Entnahmestelle, so daß sich eine aufwendige Vereinzelvorrichtung erübrigt.

Gemäß einem zusätzlichen Merkmal der Erfindung sind die Borstenleisten in der Höhe verstellbar angeordnet, wodurch in vorteilhafter Weise eine Anpassung an Platten verschiedener Höhe ermöglicht wird.

Weitere Einzelheiten der Erfindung werden nachfolgend anhand der schematischen Zeichnung beschrieben. Es zeigen

Fig. 1 ein erfindungsgemäßes Transportmagazin in einer Seitenansicht und

Fig. 2 das Magazin nach Fig. 1 in der Draufsicht.

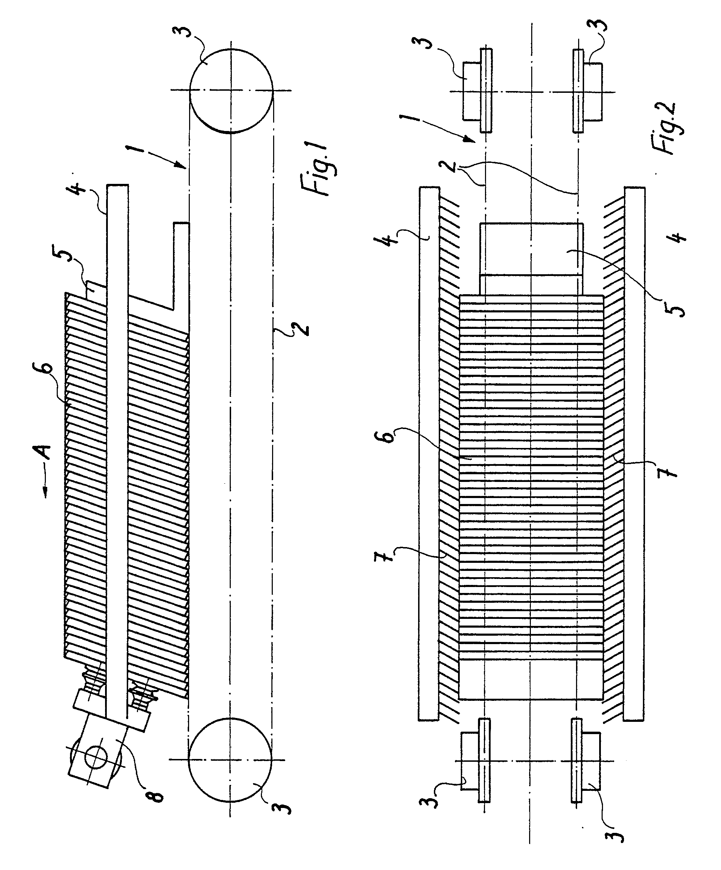

In den Fig. 1 und 2 ist eine Transporteinrichtung 1, vorzugsweise in Form von parallelen endlosen Transportketten 2 mit Umlenk- bzw. Antriebsrädern 3 dargestellt. Die Transportketten 2 bilden zusammen mit zwei seitlich, an nicht gezeigten Gestellteilen angeordneten Borstenleisten 4 und einem Plattenfolger 5 ein Magazin für Akkumulatorenplatten 6. Die Akkumulatorenplatten 6 sind hintereinander, in Transportrichtung A auf der Transportkette schräg nach hinten stehend gestapelt, wobei das hintere Ende des Stapels an dem eine schräge Stützwand aufweisenden Plattenfolger 5 abgestützt ist.

Die Borstenleisten 4 weisen in Transportrichtung A schräg nach vorne gerichtete Borsten 7 auf, welche an den Akkumulatorenplatten 6 seitlich angreifen und diese damit gleichzeitig führen. Am vorderen Ende des Stapels ist eine Entnahmeeinrichtung in Form einer Vakuumsaugplatte 8 angeordnet, die zum Weitertransport der Platten zur nächsten Fertigungsstation dient, die in Fig. 2 aus Gründen der Übersichtlichkeit nicht dargestellt ist.

Die Borstenleisten 4 können im Rahmen der Erfindung aus beliebigen, mit den Akkumulatorplatten kompatiblen Kunststoff- oder Metallmaterialien bestehen, vorteilhaft aus Polyamid, Stahl oder Messing.

Es versteht sich, daß die Erfindung im Rahmen des allgemeinen Erfindungsgedankens abgewandelt werden kann.

## Ansprüche

1. Magazin für Akkumulatorenplatten, mit einer horizontalen Transporteinrichtung, auf welcher die Akkumulatorenplatten in Transportrichtung schräg nach hinten stehend gestapelt und am hinteren Stapelende mittels eines Plattenfolgers abgestützt sind, wobei am vorderen Stapelende des Stapels eine Entnahmeeinrichtung für die Akkumulatorenplatten vorgesehen ist, dadurch gekennzeichnet, daß beiderseits der Transporteinrichtung (1) Borstenleisten (4) mit in Transportrichtung (A) schräg nach vorne gerichteten Borsten (7) angeordnet sind, welche mit den Akkumulatorenplatten (6) seitlich in Eingriff stehen.

2. Transportmagazin nach Anspruch 1, dadurch gekennzeichnet, daß die Borstenleisten (4) in der Höhe verstellbar angeordnet sind.

Fig.1

Fig.2

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int Cl.⁵) |
|---|---|---|---|
| A | <u>CH - A5 - 570 902</u> <br> (SIG) <br>     * Fig. 2 * <br> -- | 1 | H 01 M 10/14 <br> B 65 G 1/133 |
| D,A | <u>EP - A2 - 0 141 806</u> <br> (ELBAK) <br>     * Zusammenfassung; Fig. 2 * <br> -- | 1 | |
| A | <u>EP - A2 - 0 114 801</u> <br> (JUNGFER) <br>     * Zusammenfassung; Fig. 1 * <br> ---- | 1 | |

RECHERCHIERTE SACHGEBIETE (Int Cl.⁵)

H 01 M
B 65 G

Der vorliegende Recherchenbericht wurde für alle Patentansprüche erstellt.

| Recherchenort | Abschlußdatum der Recherche | Prüfer |
|---|---|---|
| WIEN | 05-09-1990 | LUX |